# EUROPÄISCHE PATENTSCHRIFT

(11) **EP 2 234 120 B1**
(45) Veröffentlichungstag und Bekanntmachung des Hinweises auf die Patenterteilung: **16.04.2014**
(21) Anmeldenummer: 10156510.9
(22) Anmeldetag: 15.03.2010
(51) Int. Cl.: H01B 7/40, H01B 13/012, B29C 45/26, B60R 16/02, H02G 1/14, B29C 39/10

(54) **Verfahren zum Herstellen eines Kabelbaums, Vorrichtung zum Aufgeben eines aushärtenden Materials und Kabelbaum**
Method for producing a cable harness, device for dispensing a hardening material and cable harness
Procédé de fabrication d'un faisceau de câbles, dispositif d'expédition d'un matériau durci et faisceau de câble

(30) Priorität: 23.03.2009 DE 102009001751
(43) Veröffentlichungstag der Anmeldung: 29.09.2010
(73) Patentinhaber: S-Y SYSTEMS TECHNOLOGIES EUROPE GMBH, 93059 Regensburg (DE)
(72) Erfinder: Roderer, Götz, 93053 Regensburg (DE); Einert, Martin, 93077, Oberndorf (DE)
(74) Vertreter: Beck, Josef

(56) Entgegenhaltungen:
- EP-A1- 0 644 639
- WO-A1-99/10152
- DE-A1- 2 016 730
- DE-U1-202007 008 747

## Beschreibung

Die Erfindung betrifft ein Verfahren zum Herstellen eines Kabelbaums gemäß Patentanspruch 1, eine Vorrichtung zum Abgeben eines aushärtenden Materials gemäß Patentanspruch 9 und einen Kabelbaum gemäß Patentanspruch 12.

Aus DE 1515626 ist ein Verfahren zur Herstellung von Kabelbäumen bekannt. Bei dem bekannten Verfahren werden Leitungen einzeln oder in Bündeln in auf einer Modellpalette montierten Halbformen eingelegt. Dann werden die Halbformen mit den dazugehörigen Halbgegenformen verschlossen und die so gebildeten Hohlräume mit den Leitungen mit einem weichelastischen Kunststoff ausgegossen oder ausgeschäumt.

Das beschriebene Verfahren weist den Nachteil auf, dass es relativ aufwändig ist und zudem bei einer Änderung der Form des Kabelbaums relativ hohe Kosten entstehen, da die Halbformen und die dazugehörigen Halbgegenformen angepasst werden müssen.

Aus WO 99/10152 ist eine Füllvorrichtung bekannt. Ein Kabelbaum wird ebenfalls beschrieben.

Die Aufgabe der Erfindung besteht darin, ein vereinfachtes Verfahren zum Herstellen eines Kabelbaums, eine verbesserte Vorrichtung zum Abgeben eines aushärtenden Materials und einen verbesserten Kabelbaum bereitzustellen.

Die Aufgabe der Erfindung wird durch das Verfahren gemäß Patentanspruch 1, durch die Vorrichtung gemäß Patentanspruch 9 und durch den Kabelbaum gemäß Patentanspruch 12 gelöst.

Weitere vorteilhafte Ausführungsformen der Erfindung sind in den abhängigen Ansprüchen angegeben.

Ein Vorteil des erfindungsgemäßen Verfahrens gegenüber dem Stand der Technik besteht darin, dass der Kabelbaum mit Hilfe einer offenen Halbform hergestellt wird. Auf diese Weise ist es nicht erforderlich, eine Gegenhalbform herzustellen und einen geschlossenen Kabelkanal auszubilden. Damit sind sowohl die Kosten für die Bereitstellung der Halbform reduziert als auch eine Verbesserung beim Einbringen des aushärtenden Materials in die Halbform erreicht. Aufgrund der offenen Halbform kann das Material abschnittsweise in die Halbform eingegossen werden. Dabei wird beispielsweise eine Abgabedüse entlang der Halbform bewegt und aushärtendes Material in die Halbform eingegossen oder eingeschäumt. Versuche haben gezeigt, dass es ausreichend ist, wenn der Kabelbaum auf drei Seiten eine definierte Form und/oder Oberfläche aufweist. Die vierte Seite, d. h. die offene Seite der Halbform ist in Bezug auf die genaue Oberflächenstruktur weniger von Bedeutung. Wesentlich ist dabei nur eine ausreichende Überdeckung des Kabels mit dem aushärtenden Material, so dass ein Schutz des Kabels auch bei der Verwendung der offenen Halbform gewährleistet ist. Abhängig von der gewählten Ausführungsform kann als aushärtendes Material Kunststoffmaterial, Kautschuk oder ein Schaum wie z. B. ein Polyurethan(PU)-Schaum verwendet werden.

In einer weiteren vorteilhaften Ausführungsform wird nach dem Abgeben des aushärtenden Materials in die Halbform ein Deckel auf die Halbform aufgelegt, um ein Glattstreichen des aushärtenden Materials auf der offenen Seite der Halbform zu erreichen. Damit wird der Kabelbaum auf der Seite der offenen Halbform präzise abgeformt, was bei speziellen Anwendungen von Vorteil sein kann.

In einer weiteren Ausführungsform weist die Halbform wenigstens eine Sperrwand auf, die einen von der Halbform gebildeten Kanal in der Längsrichtung begrenzt oder in zwei Abschnitte unterteilt. Somit ist es möglich, einen Abschnitt der Halbform mit aushärtendem Material aufzufüllen, wobei angrenzend zur Sperrwand ein weiterer Abschnitt der Halbform nicht aufgefüllt wird. Zudem kann in einer weiteren Ausführungsform auf beiden Seiten der Sperrwand unterschiedliches Material mit unterschiedlichen Eigenschaften in die Halbform eingefüllt werden. Somit ist eine erhöhte Flexibilität bei der Herstellung des Kabelbaums möglich.

In einer weiteren Ausführungsform ist in der Sperrwand eine abdichtende Öffnung zum Durchführen eines Kabels vorgesehen. Damit können auf einfache Weise die Kabel durch die Sperrwand geführt werden, wobei wenig oder nahezu kein an die Sperrwand angrenzendes aushärtendes Material durch die Öffnung hindurchfließt.

In einer weiteren Ausführungsform ist die abdichtende Öffnung in Form eines elastischen Schlitzes ausgebildet, der in der Sperrwand ausgebildet ist. Damit wird eine einfache und sichere Abdichtung der Öffnung erreicht.

In einer weiteren Ausführungsform weist die Halbform auf einer Innenseite ein Abstandselement und/oder ein Führungselement für ein Kabel auf. Durch das Vorsehen des Abstandselements und/oder des Führungselements ist sichergestellt, dass das Kabel einen ausreichenden Abstand zur Innenwand der Halbform aufweist, so dass das Kabel mit einer definierten Schichtdicke aus dem aushärtenden Material überdeckt ist. Damit ist ein ausreichender mechanischer Schutz des Kabels gewährleistet.

In einer weiteren Ausführungsform weist die Halbform in Längsrichtung eine nach innen ragende Einbuchtung auf, die im aushärtenden Material des Kabelbaums eine Ausnehmung ausformt. Die Ausnehmung ist beispielsweise zum Einlegen eines weiteren Kabels vorgesehen. Beispielsweise ist die Einbuchtung von einem ersten zu einem zweiten Abstandselement geführt oder so tief ausgebildet, dass ein in die Halbform eingelegtes Kabel auf der Einbuchtung zur Auflage gelangt. Damit ist gewährleistet, dass nach dem Abformen des Kabelbaums aus der Halbform eine Ausnehmung in das ausgehärtete Material des Kabelbaums eingebracht ist, die bis zu den Kabeln reicht. Somit kann auf einfache Weise von außen beispielsweise eine Ersatzleitung oder bei einer Reparatur eine Reparaturleitung an die bestehenden Kabel und/oder elektrischen Verbinder des Kabelbaums angeschlossen werden, ohne die Ummantelung aus dem ausgehärteten Material aufschneiden zu müssen.

In einer weiteren Ausführungsform sind die Halbformen aus einem kostengünstigen Material, beispielsweise Kunststoff hergestellt und werden mit dem ausgehärteten Material als Teil des Kabelbaums verbaut. Dadurch entfällt ein Entformen des Kabelbaums aus der Halbform. Zudem kann die Halbform eine Außenhülle für den Kabelbaum darstellen, die eine besondere Funktion wie z. B. die einer mechanischen, physikalischen oder chemischen Schutzschicht übernimmt. Dazu weist die Halbform eine größere Härte als das ausgehärtete Material auf.

In einer weiteren Ausführungsform werden Abschnitte der Halbform mit unterschiedlichen aushärtenden Materialien hergestellt, um Abschnitte mit unterschiedlichen mechanischen, chemischen oder elektrischen Eigenschaften zu erhalten. Beispielsweise können weichere Abschnitte für Biegebereiche und härtere Abschnitte für mechanisch beanspruchte Bereiche des Kabelbaums auf diese Weise hergestellt werden.

In einer weiteren Ausführungsform wird in die Halbform ein Halteelement für den Kabelbaum eingelegt und mit dem aushärtenden Material wenigstens teilweise umgossen. Auf diese Weise wird eine Fixierung des Halteelements im Kabelbaum erreicht. Das Halteelement dient zur mechanischen Befestigung des Kabelbaums an einem festgelegten Punkt der Karosserie.

Die erfindungsgemäße Vorrichtung zum Abgeben eines aushärtenden Materials, insbesondere eines Schaums in eine Halbform weist eine Abgabedüse zum Abgeben des Materials auf. Zudem ist eine Niederdrückeinheit vorgesehen, die in Bewegungsrichtung der Vorrichtung vor der Abgabedüse angeordnet ist. Die Niederdrückeinheit ist in der Weise ausgebildet, dass ein Kabel vor dem Abgeben des aushärtenden Materials durch die Niederdrückeinheit tiefer in die Halbform eingedrückt wird. Damit ist gewährleistet, dass das Kabel in einer gewünschten Lage in der Halbform vor dem Abgeben des aushärtenden Materials angeordnet ist. Somit wird sichergestellt, dass das Kabel auf allen Seiten, insbesondere auf der oberen Seite ausreichend mit aushärtbarem Material umgeben wird. Auf diese Weise kann Material eingespart werden, da die Schichtdicke genauer festgelegt werden kann.

In einer weiteren Ausführungsform weist die Vorrichtung eine Glätteinheit auf, die in Bewegungsrichtung nach der Abgabedüse angeordnet ist. Die Glätteinheit ist ausgebildet, um das abgegebene aushärtbare Material, insbesondere einen Schaum, auf der offenen Seite der Halbform glattzustreichen und/oder mit einer definierten Struktur zu versehen. Damit wird eine definierte Höhe und/oder eine definierte Oberflächenstruktur auf der offenen Seite der Halbform ermöglicht, ohne die Halbform schließen zu müssen. Die definierte Struktur dient beispielsweise zur Festlegung einer definierten Rauhigkeit und/oder Elastizität im Oberflächenbereich der Ummantelung des Kabelbaums.

In einer weiteren Ausführungsform weist die Niederdrückeinheit eine geneigt angeordnete Druckfläche auf, die das Kabel in die Halbform hineindrückt. Damit wird ein schonendes Eindrücken des Kabels erreicht, so dass die Verfahrgeschwindigkeit der Abgabedüse erhöht werden kann.

In einer bevorzugten Ausführungsform ist die Abgabedüse von einer Dichtwand umgeben, die die Halbform im Bereich der Abgabedüse abdeckt. Damit ist sichergestellt, dass die Halbform beim Füllen nicht überfüllt wird und Material seitlich aus der Halbform heraus fließt.

Der erfindungsgemäße Kabelbaum weist wenigstens eine seitliche Ausnehmung auf, die bis zu einem Kabel geführt ist. Diese Ausnehmung ermöglicht es, nachträglich ein Kabel an die bereits bestehenden Kabel und/oder elektrischen Verbinder anzuschließen, ohne die Ummantelung des Kabelbaums aufschneiden zu müssen. Somit können auf einfache Weise Zusatzleitungen an den Kabelbaum angeschlossen werden oder defekte Leitungen über Ersatzleitungen repariert werden.

In einer weiteren Ausführungsform ist die Ausnehmung in Längsrichtung des Kabelbaums ausgebildet und zur Aufnahme einer gesamten Länge eines Kabels geeignet. Auf diese Weise wird bei Einbringen eines weiteren Kabels der bestehende Durchmesser des Kabelbaums nicht vergrößert.

In einer weiteren Ausführungsform weist der Kabelbaum Abschnitte mit einer Ummantelung aus unterschiedlichen aushärtbaren Materialien auf. Beispielsweise können die Abschnitte Materialien mit unterschiedlichen Härten aufweisen. Somit können beispielsweise Biegeabschnitte mit elastischem Material und Abschnitte aus einem steifen Material in einer Kabelbaumstruktur ausgebildet sein.

In einer weiteren Ausführungsform weist der Kabelbaum zwischen zwei Abschnitten mit Ummantelung einen freien Abschnitt auf. Somit wird eine erhöhte Flexibilität des Kabelbaums beim Verlegen gewährleistet.

In einer weiteren Ausführungsform weist der Kabelbaum eine Halbform auf, in der das ausgehärtete Material angeordnet ist. Mit der verlorenen Halbform wird ein präzise Kontur des Kabelbaums vorgegeben. Zudem kann die Halbform andere mechanische und/oder physikalische und/oder chemische Eigenschaften als das ausgehärtete Material aufweisen.

In einer weiteren Ausführungsform ist ein Halteelement für den Kabelbaum in dem ausgehärteten Material eingebettet. Das eingebettete Halteelement kann beispielsweise zur Fixierung des Kabelbaums an vorgegebenen Verbindungsstellen einer Karosserie eines Kraftfahrzeugs verwendet werden.

Die Erfindung wird im Folgenden anhand der Figuren näher erläutert. Es zeigen:
Figur 1 schematische Darstellungen einer Halbform mit Kabelbaum,
Figur 2 eine Halbform mit einem Abstandselement,
Figur 3 eine Halbform mit einer Rippe,
Figur 4 eine Halbform mit einer Sperrwand,
Figur 5 eine Ausführungsform eines Kabelbaums,
Figur 6 eine zweite Ausführungsform eines Kabelbaums, und
Figur 7 eine schematische Darstellung einer Füllvorrichtung zum Auffüllen der Halbform.

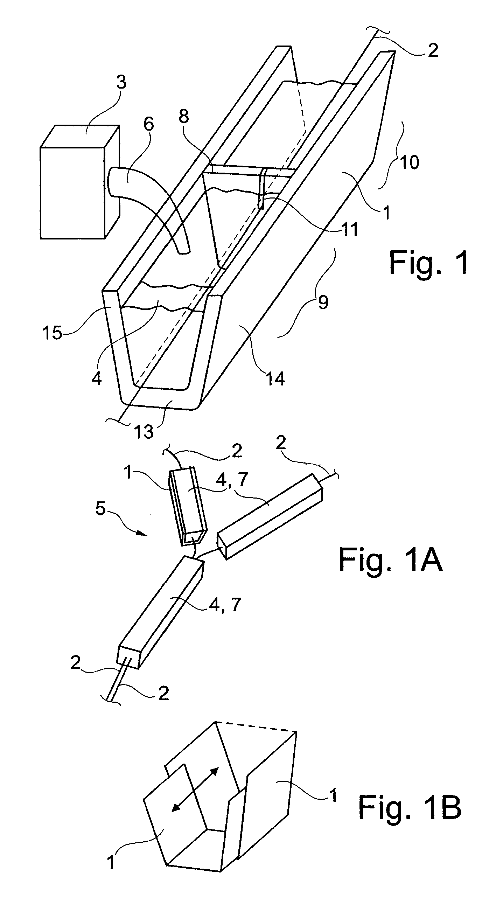

Figur 1 zeigt in einer schematischen Darstellung eine Halbform 1. Die Halbform 1 weist eine Bodenplatte 13 und seitlich sich daran anschließende Seitenwände 14, 15 auf, die vorzugsweise leicht nach außen geneigt angeordnet sind. Die Halbform 1 begrenzt auf drei Seiten eine Hohlform eines herzustellenden Kabelbaums. Zur Herstellung eines Kabelbaums wird wenigstens eine elektrische Leitung oder ein elektrisches Kabel 2 in Längsrichtung in die Halbform 1 eingelegt. In der Regel werden mehrere elektrische Leitungen oder Kabel 2 zu einem Kabelbaum vereinigt. Der Einfachheit halber ist in Figur 1 nur ein einziges Kabel 2 dargestellt. Anschließend wird die Halbform 1 mit einer Füllvorrichtung 3 wenigstens teilweise mit aushärtendem Material 4 aufgefüllt. Die Füllvorrichtung 3 weist eine Abgabedüse 6 auf, über die Material 4 in die Halbform 1 abgegeben wird. Das Material 4 kann beispielsweise flüssiger Kunststoff oder ein aushärtender Schaum wie z. B. ein Polyurethanschaum sein. Es können jedoch auch andere aushärtende Materialien zum Ausbilden einer Ummantelung 7 des Kabelbaums verwendet werden. Die Halbform 1 wird zumindest so weit aufgefüllt, dass das Kabel 2 in radialer Richtung vollständig von dem aushärtenden Material 4 umgeben ist. Nach dem Aushärten wird der Kabelbaum, d. h. das Kabel 2 und eine Ummantelung aus dem ausgehärteten Material 4 aus der Halbform 1 entnommen.

In der Ausführungsform der Figur 1 ist vorzugsweise eine Sperrwand 8 in die Halbform 1 eingebracht, wobei die Sperrwand 8 die Halbform 1 in einen ersten Abschnitt 9 und in einen zweiten Abschnitt 10 unterteilt. Die Sperrwand 8 weist eine Öffnung 11, beispielsweise in Form eines Schlitzes, auf, durch den das Kabel 2 geführt ist. Abhängig von der gewählten Ausführungsform kann die Öffnung 11 als abdichtende Öffnung beispielsweise mit einer Dichtlippe oder mit elastischen Seitenkanten in Form eines Schlitzes ausgebildet sein.

Mit Hilfe der Sperrwand 8 ist es möglich, im ersten Abschnitt 9 ein anderes aushärtendes Material 4 als im zweiten Abschnitt 10 einzubringen. Beispielsweise kann bei der Verwendung von Polyurethan als aushärtendes Material im ersten Abschnitt 9 der PU-Schaum weicher ausgebildet werden als im zweiten Abschnitt 10. Dies kann insbesondere von Vorteil sein, wenn der erste Abschnitt 9 für einen Biegebereich des Kabelbaums vorgesehen ist, so dass sich dieser leichter biegen lassen muss. Zudem kann beispielsweise der zweite Abschnitt 10 in einem Bereich des Kraftfahrzeugs eingesetzt werden, in dem er einer mechanischen Druckbelastung ausgesetzt ist. Somit ist es in diesem Bereich vorteilhaft, wenn das Kabel 2 im zweiten Abschnitt 10 von einer härteren Ummantelung 7 umgeben ist.

Aufgrund der Anordnung der Sperrwand 8 ist es möglich, den Übergang zwischen zwei unterschiedlichen Materialien 4 abrupt durchführen zu können. Zudem ist es nicht erforderlich, zwei Halbformen zu verwenden oder den Auffüllvorgang zu unterbrechen bis das erste Material einigermaßen ausgehärtet ist, um dann mit dem zweiten Material weiterzumachen.

Auf diese Weise wird beispielsweise ein Kabelbaum 5 erhalten, wie er in Figur 1A dargestellt ist. In Figur 1A ist ein Kabelbaum mit zwei Kabeln 2 dargestellt, die in einem Abschnitt in einer Ummantelung 7 aus dem ausgehärteten Material 4 gemeinsam eingebettet sind und anschließend in zwei Verzweigungen übergehen, in denen jeweils ein Kabel von einer Ummantelung 7 aus dem ausgehärteten Material 4 umgeben ist.

Abhängig von der gewählten Ausführungsform kann die Halbform 1 auch am ausgehärteten Material 4 verbleiben, wie in einer der Abzweigungen des Kabelbaums 5 der Figur 1A dargestellt ist. In dieser Ausführungsform ist die Halbform 1 dann als verlorene Halbform verwendet. Dies kann von Vorteil sein, wenn die Halbform aus einem kostengünstigen Material hergestellt ist und besondere mechanische, physikalische und/oder chemische Eigenschaften des Kabelbaums übernimmt. Beispielsweise kann die Halbform 1 aus einem sehr harten Material gefertigt sein, wobei dann das ausgehärtete Material 4 ein besonders weiches Material sein kann, da die Halbform 1 die mechanische Stabilität des Kabelbaums übernimmt. Weiterhin kann die Halbform 1 wasserdicht und/oder elektrisch isolierend und/oder chemisch stabil sein.

Figur 1B zeigt eine teleskopartig auseinanderziehbare Halbformanordnung, die aus zwei ineinander gesteckten Halbformen besteht. Abhängig von der gewünschten Länge der Halbformanordnung werden die zwei Halbformen 1 tiefer oder weniger tief ineinander gesteckt. Auf diese Weise kann die Länge der Halbformanordnung auf eine entsprechende Länge eines Kabelbaumabschnitts angepasst werden.

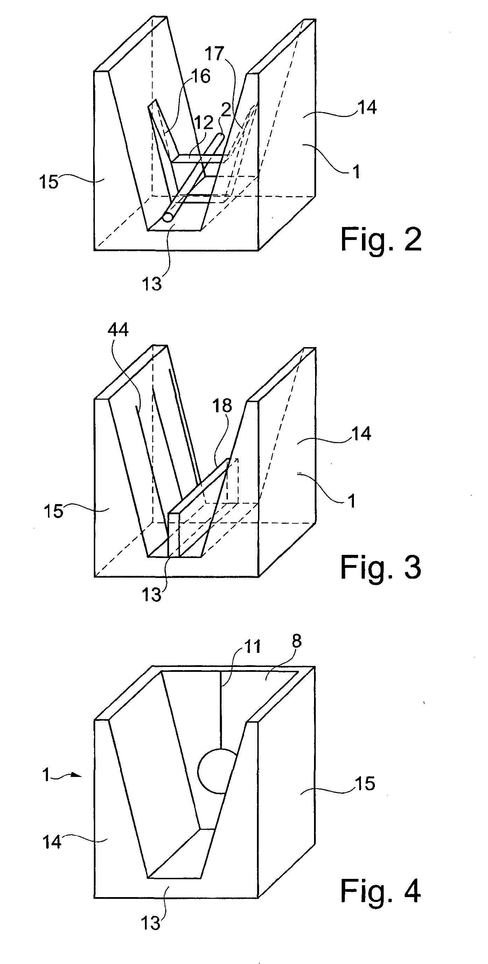

Figur 2 zeigt in einer schematischen Darstellung eine weitere Ausführungsform einer Halbform 1, die auf einer Innenseite ein Abstandselement 12 aufweist. Das Abstandselement 12 ist in Form eines Steges ausgebildet, der quer zur Längsrichtung der Halbform 1 auf dem Boden 13 angeordnet ist und sich seitlich von der ersten Seitenwand 14 bis zur gegenüberliegenden zweiten Seitenwand 15 erstreckt. Das Abstandselement 12 kann in Form eines einfachen Steges ausgebildet sein. Zudem kann das Abstandselement 12 auch in Form eines Steges ausgebildet sein, der angrenzend an die erste und die zweite Seitenwand 14, 15 Einführungsschrägen 16, 17 aufweist, wie in Figur 2 dargestellt ist. Die Einführungsschrägen 16, 17 laufen nach unten konisch zusammen, so dass beim Einlegen eines oder mehrerer Kabel 2 diese in einem Mittenbereich, vorzugsweise mittig in Bezug auf die erste und die zweite Seitenwand 14, 15 der Halbform angeordnet sind.

Mit Hilfe des Abstandselements 12 wird sichergestellt, dass die Kabel 2 einen ausreichend großen Abstand zum Boden 13 aufweisen. Dadurch wird erreicht, dass das Kabel 2 von allen Seiten, d. h. auch auf einer unteren Seite in Richtung Boden 13 mit einer ausreichend dicken Ummantelung 7 bedeckt wird.

Figur 3 zeigt eine weitere Ausführungsform einer Halbform 1, bei der auf der Innenseite des Bodens 13 eine Einbuchtung in Form eines Steges 18 entlang der Längsachse der Halbform 1 ausgebildet ist. Die Halbform 1 kann Abstandselemente 12 und/oder Stege 18 aufweisen. Der Steg 18 ist beispielsweise von einem Abstandselement 12 bis zum nächsten Abstandselement 12 geführt und weist die gleiche Höhe von der Innenseite des Bodens 13 wie das Abstandselement 12 auf. Der Steg 18 dient zum Ausformen einer Ausnehmung in die Ummantelung 7 des Kabelbaums. In die ausgeformte Ausnehmung kann beispielsweise ein weiteres Kabel 2 eingelegt werden, ohne den Durchmesser des Kabelbaums zu vergrößern. Weiterhin kann die ausgeformte Ausnehmung dazu verwendet werden, um eine Reparaturleitung in die Ausnehmung einzulegen, ohne den Durchmesser des Kabelbaums zu vergrößern. Beispielsweise kann die ausgeformte Ausnehmung von einem Anschlusselement bis zum nächsten Anschlusselement des Kabelbaums geführt sein. Somit ist eine erhöhte Flexibilität zur Erweiterung und/oder zur Reparatur der Kabel des Kabelbaums möglich, ohne die Ummantelung 7 aufschneiden zu müssen.

In einer weiteren Ausführungsform können Halbformen eingesetzt werden, die profilierte Innenwände 44 aufweisen, wie in Figur 3 dargestellt ist. Damit kann beispielsweise ein Wellenmuster an einer Außenseite des Kabelbaums erzeugt werden, um beispielsweise ein Abbiegen des entsprechenden Abschnitts des Kabelbaums zu erleichtern.

Figur 4 zeigt in einer schematischen Darstellung eine weitere Ausführungsform einer Halbform 1, die in einem Endbereich mit einer Sperrwand 8 verschlossen ist. Die Sperrwand 8 kann beispielsweise aus Moosgummi bestehen und eine Öffnung 11 in Form eines Schlitzes bzw. eine Aussparung für die Aufnahme von Kabeln 2 des Kabelbaums aufweisen. Mit Hilfe der beschriebenen Ausführungsform kann die Ummantelung 7 bis zum Ende der Halbform 1 ausgebildet werden, ohne dass eingefülltes Material aus dem Ende der Halbform 1 herausläuft. Beispielsweise können auch beide Enden der Halbform 1 mit einer entsprechenden Sperrwand 8 verschlossen sein.

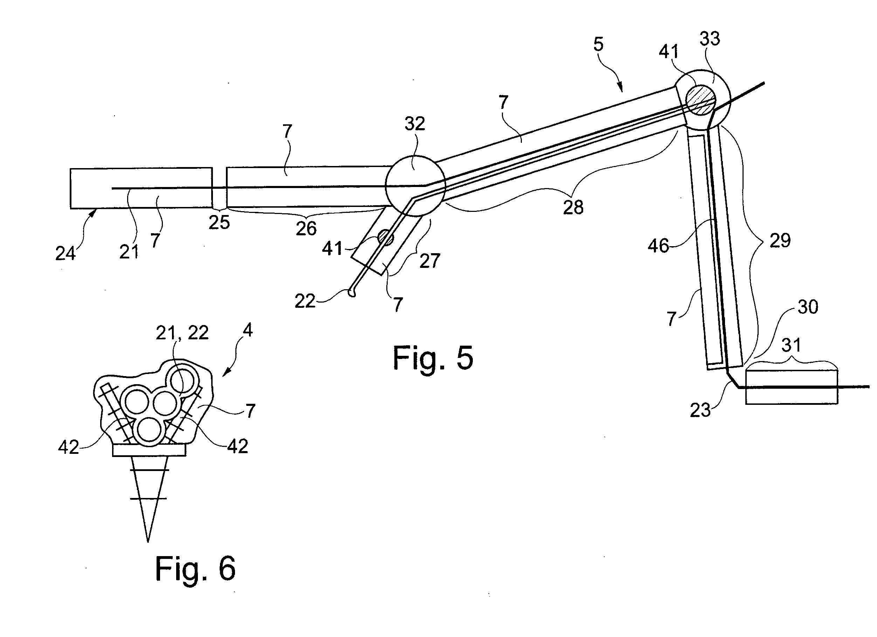

Figur 5 zeigt in einer schematischen Darstellung einen Kabelbaum 5, der eine erste, eine zweite und eine dritte Leitung 21, 22, 23 aufweist. Die erste Leitung 21 ist in einem ersten Abschnitt 24 in eine Ummantelung 7 aus einem ausgehärteten Material 4 eingebettet. An den ersten Abschnitt 24 schließt sich ein zweiter Abschnitt 25 an, in dem keine Ummantelung 7 angeordnet ist. An den zweiten Abschnitt 25 schließt sich ein dritter Abschnitt 26 an, in dem eine Ummantelung 7 ausgebildet ist und die erste Leitung 21 umfasst. An den dritten Abschnitt 26 schließt sich ein erster Verzweigungspunkt 32 an. Im ersten Verzweigungspunkt 32 ist eine zweite Leitung 22 zur ersten Leitung 21 hinzugefügt. Die zweite Leitung 22 ist über einen vierten Abschnitt 27 zum ersten Verzweigungspunkt 32 geführt. Im vierten Abschnitt 27 ist die zweite Leitung 22 in eine Ummantelung 7 aus ausgehärtetem Material 4 eingebettet. Zudem ist ein Retainer 41 in der Ummantelung eingebettet, der die zweite Leitung 22 hält. Die erste und die zweite Leitung 21, 22 gehen vom ersten Verzweigungspunkt 32 in einen fünften Abschnitt 28 über. Im fünften Abschnitt 28 sind die erste und die zweite Leitung 21, 22 in eine Ummantelung 7 aus ausgehärtetem Material 4 eingebettet. Der fünfte Abschnitt 28 geht in einen zweiten Verzweigungspunkt 33 über. Im zweiten Verzweigungspunkt 33 ist beispielsweise ein Retainer 41 eingebettet, der die erste und die zweite Leitung 21, 22 aufnimmt. Weiterhin ist eine dritte Leitung 23 zum zweiten Verzweigungspunkt 33 geführt. Die dritte Leitung 23 ist in einem achten Abschnitt 31 in eine Ummantelung 7 aus ausgehärtetem Material 4 eingebettet. An den achten Abschnitt 31 schließt sich ein siebter Abschnitt 30 an, in dem die dritte Leitung 23 nicht in eine Ummantelung 7 eingebettet ist. An den siebten Abschnitt 30 schließt sich ein sechster Abschnitt 29 an, der bis zum zweiten Verzweigungspunkt 33 geführt ist, und in dem die dritte Leitung 23 in eine Ummantelung aus einem ausgehärteten Material 4 eingebettet ist. Im sechsten Abschnitt 29 ist eine rechteckförmige Ausnehmung 46 in die Ummantelung 7 eingebracht, die durch einen Steg 18 gemäß der Figur 3 ausgeformt wurde. Die Ausnehmung 46 weist vorzugsweise einen rechteckförmigen Querschnitt auf und ist bis zur dritten Leitung 23 geführt. Zudem erstreckt sich die Ausnehmung 46 in Längsrichtung der dritten Leitung 23.

Figur 6 zeigt in einer schematischen Darstellung eine mögliche Bauform eines Retainers 41, d. h. eines Halteelements in Form eines Hörnchens, wobei die erste und die zweite Leitung 21, 22 in einer gabelförmigen Aufnahme 42 des Retainers 41 angeordnet sind. Der Retainer 41 weist auf einer Unterseite einen Zapfen 43 auf, mit dem der Retainer 41 in einer Befestigungsöffnung einer Fahrzeugkarosserie befestigt werden kann. Abhängig von der gewählten Ausführungsform können an verschiedenen Positionen des Kabelbaums 5 entsprechende Retainer 41 vorgesehen sein.

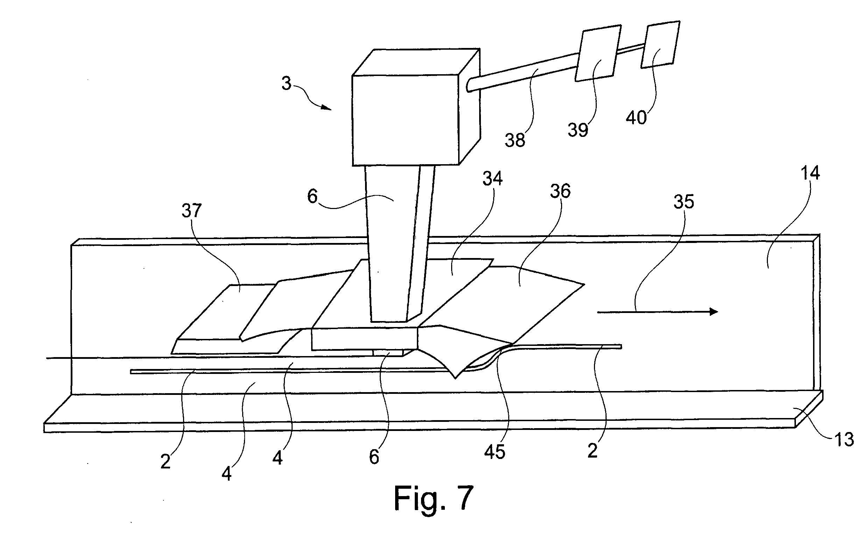

Figur 7 zeigt in einer schematischen Darstellung eine Ausführungsform der Füllvorrichtung 3, wobei die Füllvorrichtung 3 eine Abgabedüse 6 aufweist, die von einer Dichtwand 34 umgeben ist. Die Dichtwand 34 weist vorzugsweise mindestens die Breite der Öffnung der Halbform 1 auf. In der dargestellten Ausführungsform wird die Füllvorrichtung 3 von links nach rechts entsprechend der Pfeilrichtung 35 bewegt. In Bewegungsrichtung vor der Dichtwand 34 ist eine Niederdrückeinheit 36 vorgesehen. Die Niederdrückeinheit 36 dient dazu, Kabel 2 und/oder Leitungen tiefer die Halbform 1 einzudrücken, damit diese ausreichend mit dem Material 4 umformt werden können. Vorzugsweise weist die Niederdrückeinheit 36 eine Druckfläche 45 auf, die in einem Winkel geneigt zur Bewegungsrichtung der Füllvorrichtung angeordnet ist. Die Druckfläche 45 weist einen oberen Abschnitt auf, der einen größeren Abstand zum Boden 13 der Halbform 1 aufweist als eine untere Fläche, die näher an der Abgabedüse 6 angeordnet ist. Damit wird bei der Bewegung der Füllvorrichtung 3 ein Kabel von dem oberen Abschnitt erfasst, wobei das Kabel in Richtung auf den unteren Abschnitt entlang gleitet und von der Druckfläche 45 tiefer in die Halbform hineingedrückt wird. Anschließend wird durch Abgabe von Material 4 das Kabel mit dem Material 4 umspritzt. Abhängig von der gewählten Ausführungsform kann auch auf die Niederdrückeinheit 36 verzichtet werden. Weiterhin ist in einer bevorzugten Ausführungsform gegenüberliegend zur Niederdrückeinheit 36 eine Glätteinheit 37 vorgesehen. Die Glätteinheit 37 dient dazu, das von der Abgabedüse 6 abgegebene Material glattzustreichen. Damit wird zum einen eine gleichmäßige Verteilung des abgegebenen Materials 4 über die Breite der Halbform 1 erreicht und zudem eine definierte Rauigkeit der Oberfläche hergestellt. Die Glätteinheit 37 kann beispielsweise in Form einer elastisch vorgespannten Platte ausgebildet sein, die in Richtung auf den Boden 13 federbelastet ist.

Abhängig von der gewählten Ausführungsform kann die Dichtwand 34 elastisch ausgebildet sein. Die flexible Ausbildung der Dichtwand 34 bietet die Möglichkeit, die Dichtwand 34 in der Breite an verschieden breite Halbformen 1 bzw. an unterschiedliche Höhenpositionen in der Halbform 1 und damit an verschiedene Abstände der zwei seitlich nach außen geneigten Seitenwände 14, 15 anzupassen. Beispielsweise kann die Dichtwand 34 aufblasbar oder im Randbereich mit elastischen Dichtlippen ausgebildet sein.

Die Füllvorrichtung 3 steht über eine Zuleitung 38 mit einer Mischeinheit 39 in Verbindung. Die Mischeinheit 39 wird von einer Steuereinheit 40 angesteuert und führt entsprechend einer gewünschten Härte und/oder chemischen Zusammensetzung und/oder elektrischen Eigenschaft ein entsprechend zusammengesetztes Material 4, beispielsweise Polyurethan zur Abgabedüse 6. Somit können abschnittsweise Ummantelungen 7 mit unterschiedlichen mechanischen, physikalischen und/oder chemischen Eigenschaften hergestellt werden.

## Patentansprüche

1. Verfahren zum Herstellen eines Kabelbaums (5) mit wenigstens einem Kabel (2), wobei das Kabel (2) in eine offene Halbform (1) eingelegt wird, wobei die offene Halbform (1) mit einem aushärtenden Material (4) wenigstens teilweise aufgefüllt wird, wobei nach einer Wartezeit ein Kabelbaum (5) mit einer Ummantelung (7) aus einem wenigstens teilweise ausgehärteten Material (4) erhalten wird, wobei die Halbform in Längsrichtung beabstandet zwei Abstandselemente (12) aufweist, wobei zwischen den Abstandselementen (12) in Längsrichtung eine Einbuchtung (18) auf einer Innenseite vorgesehen ist, um in der Ummantelung (7) eine Ausnehmung zum Einlegen eines weiteren Kabels (2) zu erzeugen.

2. Verfahren nach Anspruch 1, wobei als aushärtendes Material (4) ein Schaum, insbesondere ein PU-Schaum verwendet wird.

3. Verfahren nach einem der Ansprüche 1 oder 2, wobei die Halbform (1) wenigstens in einem Abschnitt eine Sperrwand (8) aufweist, die eine von der Halbform (1) gebildete Hohlform für einen Kabelbaum in einer Längsrichtung begrenzt, und wobei die Sperrwand (8) eine abdichtende Öffnung (11) zum Durchführen eines Kabels (2) aufweist.

4. Verfahren nach Anspruch 3, wobei die Sperrwand (8) aus einem elastischen Material mit einem Schlitz (11) ausgebildet ist, wobei der Schlitz die abdichtende Öffnung darstellt.

5. Verfahren nach einem der Ansprüche 1 bis 4, wobei die Halbform (1) mit der Ummantelung (7) verbaut wird und am Kabelbaum (5) verbleibt.

6. Verfahren nach einem der Ansprüche 1 bis 5, wobei die Zusammensetzung des aushärtenden Materials (4) in wenigstens zwei Abschnitten des Kabelbaums (5) unterschiedlich eingestellt wird, um vorzugsweise Ummantelungen (7) mit weicheren und härteren Abschnitten herzustellen.

7. Verfahren nach einem der Ansprüche 1 bis 6, wobei in der Halbform ein Halteelement (41) für ein Kabel (2) angeordnet ist und mit dem aushärtenden Material (4) wenigstens teilweise eingegossen wird.

8. Füllvorrichtung (3) zum Abgeben eines aushärtenden Materials (4) in eine offene Halbform (1) mit einer Abgabedüse (6) zum Abgeben des Materials (4), mit einer Niederdrückeinheit (36), die in Bewegungsrichtung (35) der Füllvorrichtung (3) vor der Abgabedüse (6) angeordnet ist, wobei die Niederdrückeinheit (36) ausgebildet ist, um ein Kabel (2) tiefer in die Halbform (1) zu drücken.

9. Füllvorrichtung (3) nach Anspruch 8, wobei eine Glätteinheit (37) vorgesehen ist, die in Bewegungsrichtung (35) der Füllvorrichtung (3) nach der Abgabedüse (6) angeordnet ist, wobei die Glätteinheit (37) ausgebildet ist, um das Material (4), insbesondere den Schaum auf einer Oberseite glatt zu streichen.

10. Füllvorrichtung (3) nach Anspruch 8 oder 9, wobei die Niederdrückeinheit (36) eine Druckfläche (45) aufweist, die der Halbform zugewandt ist, wobei die Druckfläche (45) in einem geneigten Winkel zu einem Boden (13) der Halbform (1) angeordnet ist, so dass das Kabel (2) beim Niederdrücken von einem oberen Abschnitt erfasst wird, wobei das Kabel (2) entlang der Druckfläche (45) zu einem unteren Abschnitt gleitet und von dem unteren Abschnitt der Druckfläche (45) in die Halbform (1) gedrückt wird.

11. Kabelbaum (5) mit wenigstens einem Kabel (2), das in einer ausgehärteten, insbesondere geschäumten Ummantelung (7) wenigstens teilweise eingebettet ist, wobei in der Ummantelung (7) wenigstens eine seitliche Ausnehmung (46) eingebracht ist, die bis zu dem einen Kabel (2) geführt ist.

12. Kabelbaum nach Anspruch 11, wobei die Ausnehmung (46) in Längsrichtung des Kabelbaums (5) ausgebildet ist und zur Aufnahme eines weiteren Kabels (2) dient.

13. Kabelbaum nach einem der Ansprüche 11 oder 12, wobei der Kabelbaum (5) Abschnitte (22, 23, 24) mit unterschiedlich harter Ummantelung(7) aufweist.

14. Kabelbaum nach einem der Ansprüche 11 bis 13, wobei eine Halbform an der Ummantelung (7) befestigt ist oder ein Halteelement (41) für den Kabelbaum in der Ummantelung (7) eingebettet ist.

## Claims

1. Method for producing a cable harness (5) comprising at least one cable (2), the cable (2) being placed into an open half mould (1), the open half mould (1) being at least partially filled with a hardening material (4), a cable harness (5) with a sheathing (7) of an at least partially hardened material (4) being obtained after a waiting time, the half mould having two spacing elements (12) that are spaced apart in the longitudinal direction, an inward projection (18) being provided on an inner side between the spacing elements (12) in the longitudinal direction, in order to produce in the sheathing (7) a recess for the placing of a further cable (2).

2. Method according to Claim 1, a foam, in particular a PU foam, being used as the hardening material (4).

3. Method according to either of Claims 1 and 2, the half mould (1) having at least in one portion a barrier wall (8), which bounds a hollow form, formed by the half mould (1), for a cable harness in a longitudinal direction, and the barrier wall (8) having a sealing opening (11) for leading through a cable (2).

4. Method according to Claim 3, the barrier wall (8) being formed from an elastic material with a slit (11), the slit representing the sealing opening.

5. Method according to one of Claims 1 to 4, the half mould (1) being fitted along with the sheathing (7) and remaining on the cable harness (5).

6. Method according to one of Claims 1 to 5, the composition of the hardening material (4) being set differently in at least two portions of the cable harness (5), in order preferably to produce sheathings (7) with softer and harder portions.

7. Method according to one of Claims 1 to 6, a holding element (41) for a cable (2) being arranged in the half mould and at least partially cast in with the hardening material (4).

8. Filling device (3) for dispensing a hardening material (4) into an open half mould (1), comprising a dispensing nozzle (6) for dispensing the material (4), comprising a pressing-down unit (36), which is arranged ahead of the dispensing nozzle (6) in the direction of movement (35) of the filling device (3), the pressing-down unit (36) being designed for pressing a cable (2) deeper into the half mould (1).

9. Filling device (3) according to Claim 8, a smoothing unit (37) being provided, arranged after the dispensing nozzle (6) in the direction of movement (35) of the filling device (3), the smoothing unit (37) being designed for smoothing the material (4), in particular the foam, on an upper side.

10. Filling device (3) according to Claim 8 or 9, the pressing-down unit (36) having a pressing surface (45), which is facing the half mould, the pressing surface (45) being arranged at an inclined angle in relation to a base (13) of the half mould (1), so that the cable (2) is taken up by an upper portion during the pressing down, the cable (2) sliding along the pressing surface (45) to a lower portion and being pressed by the lower portion of the pressing surface (45) into the half mould (1).

11. Cable harness (5) comprising at least one cable (2), which is at least partially embedded in a hardened, in particular foamed, sheathing (7), at least one lateral recess (46) that is taken up to the one cable (2) being incorporated in the sheathing (7).

12. Cable harness according to Claim 11, the recess (46) being formed in the longitudinal direction of the cable harness (5) and serving for receiving a further cable (2).

13. Cable harness according to either of Claims 11 and 12, the cable harness (5) having portions (22, 23, 24) with a sheathing (7) of differing hardness.

14. Cable harness according to one of Claims 11 to 13, a half mould being fastened to the sheathing (7) or a holding element (41) for the cable harness being embedded in the sheathing (7).

## Revendications

1. Procédé de fabrication d'un faisceau de câbles (5) comprenant au moins un câble (2), le câble (2) étant introduit dans un demi-moule ouvert (1), le demi-moule ouvert (1) étant rempli au moins en partie d'un matériau durcissant (4), un faisceau de câbles (5) étant obtenu après un temps d'attente, avec une gaine (7) constituée d'un matériau au moins partiellement durci (4), le demi-moule présentant deux éléments d'espacement (12) espacés dans la direction longitudinale, un renfoncement (18) étant prévu sur un côté intérieur dans la direction longitudinale entre les éléments d'espacement (12) afin de produire dans la gaine (7) un évidement pour l'introduction d'un câble supplémentaire (2).

2. Procédé selon la revendication 1, dans lequel on utilise une mousse comme matériau durcissant (4), en particulier une mousse de PU.

3. Procédé selon l'une quelconque des revendications 1 ou 2, dans lequel le demi-moule (1) présente, au moins dans une portion, une paroi de blocage (8) qui limite dans une direction longitudinale un moule creux formé par le demi-moule (1) pour un faisceau de câbles, et dans lequel la paroi de blocage (8) présente une ouverture d'étanchéité (11) pour le passage d'un câble (2).

4. Procédé selon la revendication 3, dans lequel la paroi de blocage (8) est réalisée en un matériau élastique avec une fente (11), la fente constituant l'ouverture d'étanchéité.

5. Procédé selon l'une quelconque des revendications 1 à 4, dans lequel le demi-moule (1) est monté avec la gaine (7) et reste sur le faisceau de câbles (5).

6. Procédé selon l'une quelconque des revendications 1 à 5, dans lequel la composition du matériau durcissant (4) est ajustée de manière différente dans au moins deux portions du faisceau de câbles (5), afin de fabriquer de préférence des gaines (7) ayant des portions plus tendres et plus dures.

7. Procédé selon l'une quelconque des revendications 1 à 6, dans lequel un élément de retenue (41) pour un câble (2) est disposé dans le demi-moule et est au moins en partie coulé avec le matériau durcissant (4).

8. Dispositif de remplissage (3) pour distribuer un matériau durcissant (4) dans un demi-moule ouvert (1) comprenant une buse de distribution (6) pour distribuer le matériau (4), une unité de pression vers le bas (36) qui est disposée dans la direction de déplacement (35) du dispositif de remplissage (3) en amont de la buse de distribution (6), l'unité de pression vers le bas (36) étant réalisée pour presser un câble (2) plus profondément à l'intérieur du demi-moule (1).

9. Dispositif de remplissage (3) selon la revendication 8, dans lequel une unité de lissage (37) est prévue, laquelle est disposée dans la direction de déplacement (35) du dispositif de remplissage (3) en aval de la buse de distribution (6), l'unité de lissage (37) étant réalisée pour appliquer de manière lisse le matériau (4), en particulier la mousse, sur un côté supérieur.

10. Dispositif de remplissage (3) selon la revendication 8 ou 9, dans lequel l'unité de pression vers le bas (36) présente une surface de pression (45) qui est tournée vers le demi-moule, la surface de pression (45) étant disposée suivant un angle incliné par rapport à un fond (13) du demi-moule (1), de telle sorte que le câble (2) soit saisi lors de l'enfoncement vers le bas d'une portion supérieure, le câble (2) glissant le long de la surface de pression (45) jusqu'à une portion inférieure et étant pressé par la portion inférieure de la surface de pression (45) dans le demi-moule (1).

11. Faisceau de câbles (5) comprenant au moins un câble (2) qui est au moins en partie noyé dans une gaine (7) durcie, en particulier moussée, au moins un évidement latéral (46) étant pratiqué dans la gaine (7), lequel est guidé jusqu'audit un câble (2).

12. Faisceau de câbles selon la revendication 11, dans lequel l'évidement (46) est réalisé dans la direction longitudinale du faisceau de câbles (5) et sert à recevoir un câble supplémentaire (2).

13. Faisceau de câbles selon l'une quelconque des revendications 11 ou 12, dans lequel le faisceau de câbles (5) présente des portions (22, 23, 24) ayant une gaine (7) de dureté différente.

14. Faisceau de câbles selon l'une quelconque des revendications 11 à 13, dans lequel un demi-moule est fixé à la gaine (7) ou un élément de retenue (41) pour le faisceau de câbles est noyé dans la gaine (7).
